# FASCICULE DE BREVET EUROPEEN

(11) **EP 3 695 038 B1**
(45) Date de publication et mention de la délivrance du brevet: **23.04.2025**
(21) Numéro de dépôt: 18783495.7
(22) Date de dépôt: 12.10.2018
(51) Int. Cl.: D04H 1/4209, D04H 1/4218, D04H 1/4226, E04F 15/20, E04B 9/00

(54) **PANNEAU ACOUSTIQUE EN LAINE MINERALE ET PROCEDE DE FABRICATION D'UN TEL PANNEAU**
SCHALLDÄMMPLATTE AUS MINERALWOLLE, UND HERSTELLUNGSVERFAHREN EINES SOLCHEN PLATTE
MINERAL WOOL ACOUSTIC PANEL AND METHOD FOR MANUFACTURING SUCH A PANEL

(30) Priorité: 13.10.2017 EP 17196308
(43) Date de publication de la demande: 19.08.2020
(73) Titulaire: SAINT-GOBAIN ISOVER, 92400 Courbevoie (FR); Saint-Gobain Ecophon AB, 265 75 Hyllinge (SE)
(72) Inventeur: JACQUS, Gary, 75018 Paris (FR); BERGER, Sylvain, 75018 Paris (FR); LEROY, Pierre, 60370 Saint Félix (FR); NILSSON, Erling, 224 72 Lund (SE); DRAY, Delphine, 93500 Pantin (FR)
(74) Mandataire: Saint-Gobain Recherche
(86) Numéro de dépôt international: PCT/EP2018/077819
(87) Numéro de publication internationale: WO 2019/073020

(56) Documents cités:
- EP-B1- 1 743 076
- FR-A1- 2 857 900
- FR-A1- 2 928 146
- FR-B1- 2 745 597

## Description

L'invention concerne un panneau en laine minérale destiné à être utilisé comme panneau acoustique, par exemple dans un système de plafond suspendu.

Il est connu par le document EP 1 743 076 un panneau acoustique en laine minérale qui est crêpé puis fendu dans l'épaisseur et poncé. La face avant (celle destinée à être tournée vers le côté d'où provient le son à amortir) est la face coupée et poncée, qui est issue du centre du panneau avant découpe. Les fibres de cette surface et à proximité de cette surface ont une orientation préférentielle selon la direction Z. L'absorption acoustique α_{W} est supérieure ou égale à 0,7. La découpe dans l'épaisseur et le ponçage sont des étapes qui augmentent la durée de fabrication et qui sont source de production de déchets, ce qui entraîne des coûts.

Il y a donc un besoin pour un panneau réalisé sans découpe qui présente d'aussi bonnes, voire de meilleures, propriétés acoustiques.

Pour cela, l'invention propose un panneau en laine minérale destiné à être utilisé comme panneau acoustique selon la revendication 1.

Selon une autre particularité, le panneau présente un micronaire compris entre 2,5/5g et 6/5g, de préférence entre 3/5g et 6/5g, voire entre 3,5/5g et 6/5g, ou encore entre 4/5g et 5/5g ou un fasonaire compris entre 200 et 300, de préférence entre 200 et 290, voire entre 200 et 280, ou encore entre 200 et 270.

Selon une autre particularité, le panneau comprend en outre, sur chacune de ses faces principales, un voile.

Selon une autre particularité, le voile destiné à être tourné du côté d'où provient le son à amortir ayant une résistance spécifique à l'écoulement de l'air inférieure ou égale à 1 kPa.s/m, de préférence inférieure ou égale à 0,5 kPa.s/m, et le voile opposé ayant une résistivité spécifique à l'écoulement de l'air supérieure ou égale à 1 kPa.s/m, de préférence supérieure ou égal 5 kPa.s/m, voire supérieure ou égale à 10 kPa.s/m, ou encore étanche à l'air.

Selon une autre particularité, le panneau comprend un taux massique de liant compris entre 2% et 15% de la masse totale, de préférence entre 2% et 10% de la masse totale.

Selon une autre particularité, le panneau présente une absorption acoustique α_{W} supérieure ou égale à 0,9.

Selon une autre particularité, le panneau présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

L'invention concerne également un procédé de fabrication du panneau en laine minérale décrit plus haut, selon la revendication 8.

Selon une autre particularité, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, qui est comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
o le nombre de trous de chaque centrifugeur, qui est compris entre 5000 et 40000, de préférence entre 15000 et 35000, et
o la vitesse de rotation du centrifugeur à une vitesse supérieure à 2000 tours/minute.

Selon une autre particularité, le diamètre des orifices de chaque centrifugeur est compris entre 0,5 et 1,1 mm.

Selon une autre particularité, chaque centrifugeur présente un diamètre compris entre 200 et 800 mm.

Selon une autre particularité, pendant l'étape de fabrication du mat de fibres de roche, une combinaison de paramètres est réglée parmi au moins :
∘ la tirée totale de roche par jour, qui est comprise entre 100 et 250 tonnes/jour,
∘ la vitesse de rotation des rotors, qui est comprise entre 2000 et 4000 tours/min.

Selon une autre particularité, chaque rotor présente un diamètre compris entre 150 mm et 350 mm.

Selon une autre particularité, du liant est projeté sur les fibres minérales avant qu'elles ne tombent sur le tapis de réception, avec un taux compris entre 2% et 15% de la masse totale, de préférence entre 2% et 10% de la masse totale, le mat de fibres minérales étant passé en étuve, de préférence après crêpage, afin de polymériser le liant.

Selon une autre particularité, un voile est collé sur chacune des faces principales du panneau en laine minérale.

De plus, le panneau n'est pas coupé dans l'épaisseur selon un plan sensiblement parallèlement à ses faces principales. Cela signifie qu'il est issu directement de la fabrication de la laine minérale, et plus exactement qu'aucune de ses faces principales n'est une face issue d'une découpe dans un bloc de matériau de plus grand volume. Les fibres en surface et à proximité de la surface ont une orientation préférentiellement sensiblement parallèle à ladite face.

Le fait que le panneau selon l'invention ne soit pas refendu dans l'épaisseur, contrairement à ce qui est connu dans l'art antérieur, permet de gagner en temps de production, en coût matière et en gestion de déchets.

En outre, le panneau selon l'invention comporte des propriétés acoustiques très intéressantes grâce à une faible résistivité à l'écoulement d'air (comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m²) et à un module d'Young élevé (compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa), qui en font un candidat idéal pour une utilisation comme panneau acoustique En effet, dans les gammes mentionnées ci-dessus, plus la résistivité à l'écoulement d'air est faible, meilleure est l'absorption acoustique et, plus le module d'Young est important, meilleure est l'isolation acoustique.

La densité de surface du panneau selon l'invention, qui est supérieure ou égale à 3,2 kg/m², procure à celui-ci une tenue mécanique satisfaisante, qui s'améliore encore lorsque la densité de surface augmente. Ainsi, la densité de surface du panneau selon l'invention est de préférence supérieure ou égale à 4 kg/m², ou encore supérieure ou égale à 4,5 kg/m², voire supérieure ou égale à 5 kg/m².

La mesure de la résistivité à l'écoulement d'air est réalisée selon la norme ISO 9053.

La mesure du module d'Young est réalisée selon la norme ISO 18437 et selon l'article de C. Langlois, R. Panneton et N. Atalla : Polynomial relations for quasi-static mechanical characterization of isotropic poroelastic materials, J. Acoust. Soc. Am., 110:3032-3040, 2001.

Les mesures de la résistivité à l'écoulement d'air et du module d'Young sont réalisées sur le panneau sans les voiles avant/arrière.

Le panneau en laine minérale selon l'invention peut être réalisé en laine de verre, par fibrage par centrifugation interne, ou en laine de roche, par fibrage par centrifugation externe.

Les fibres minérales sont crêpées à un taux de crêpage compris entre 1,5 et 5. Le taux de crêpage a une influence sur la résistivité à l'écoulement d'air et sur le module d'Young. Le taux de crêpage est de préférence entre 2 et 5, voire entre 2,5 et 5, ou encore entre 3 et 5 pour diminuer encore la résistivité à l'écoulement d'air et augmenter le module d'Young. En effet, le crêpage favorise l'orientation des fibres selon une direction perpendiculaire Z aux faces principales du panneau : plus le taux de crêpage est élevé, plus l'orientation des fibres selon Z est importante et plus la résistivité à l'écoulement d'air est diminuée et le module d'Young augmenté.

Lorsque le panneau est en laine de verre, il présente en outre un micronaire compris entre 2,5/5g et 6/5g. De préférence, le micronaire est compris entre 3/5g et 6/5g, voire entre 3,5/5g et 6/5g, ou encore entre 4/5g et 5/5g. En effet, plus le micronaire augmente, plus la résistivité à l'écoulement d'air diminue et plus le module d'Young augmente.

Le micronaire est représentatif de la finesse des fibres de verre. La mesure du micronaire rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit " appareil micronaire ".

Lorsque le panneau est en laine de roche, il présente en outre un fasonaire compris entre 200 et 300. De préférence, le fasonaire est compris entre 200 et 290, voire entre 200 et 280, ou encore entre 200 et 270. En effet, plus le fasonaire diminue, plus la résistivité à l'écoulement d'air diminue et plus le module d'Young augmente.

Le fasonaire est représentatif de la finesse des fibres de roche. La mesure du fasonaire est une détermination de l'indice de finesse des fibres par une méthode similaire à celle du micronaire selon les normes ASTM-D-1448 ou DIN 53941. Le fasonaire est égal à la perte de charge ou différence de débit d'un courant gazeux traversant une éprouvette constituée d'une touffe de fibres minérales de masse donnée (égale à 5 g pour les mesures selon l'invention). La touffe de fibres, exemptes de liant ou de tout autre composant non fibreux, est comprimée dans une chambre cylindrique de volume prédéterminé. Le débit de gaz étant maintenu constant, on mesure à l'aide d'une colonne d'eau graduée en unités conventionnelles appelées fasonaires, la perte de charge à travers l'éprouvette. Le fasonaire est ainsi exprimé en millimètres de colonne d'eau pour 5 g (masse de l'éprouvette).

Le panneau en laine minérale présente en outre un voile sur chacune de ses faces principales. Le voile destiné à être tourné du côté d'où provient le son à amortir, dit voile avant, a une résistance spécifique à l'écoulement de l'air inférieure ou égale à 1 kPa.s/m, de préférence inférieure ou égal 0,5 kPa.s/m, de façon à laisser passer au maximum le son vers la laine minérale, qui va amortir le son pour permettre une bonne absorption acoustique. Le voile opposé, dit voile arrière, a une résistance spécifique à l'écoulement de l'air supérieure ou égale à 1 kPa.s/m, de préférence supérieure ou égal 5 kPa.s/m, voire supérieure ou égale à 10 kPa.s/m : il est de préférence étanche à l'air de façon à procurer une bonne isolation acoustique. Un voile étanche a une résistance spécifique à l'écoulement d'air qui est infinie, c'est-à-dire qui est dans les limites de ce qui peut être mesuré. Le voile avant peut être peint pour améliorer l'esthétique du panneau côté face visible. Le voile avant peut être collé sur la face avant du panneau après un léger ponçage permettant d'aplanir celle-ci.

Le panneau en laine minérale comprend en outre un taux massique de liant compris entre 2% et 15% de la masse totale, de préférence entre 2% et 10% de la masse totale.

Le panneau en laine minérale présente une absorption acoustique α_{W} supérieure ou égale à 0,9. L'absorption acoustique est mesurée selon la norme ISO 354. L'indicateur α_{W} est ensuite calculé selon la norme ISO 11654. Dans toute la demande, les mesures ont été réalisées avec un plénum de 200 mm en hauteur de construction.

Le panneau en laine minérale présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB. L'isolation acoustique est mesurée selon la norme ISO 10848-1. L'indicateur D_{nfw} est ensuite calculé selon la norme ISO 717-1. Dans toute la demande, les mesures ont été réalisées avec un plénum de 700 mm en hauteur de construction.

Les mesures d'absorption et d'isolation acoustiques sont réalisées sur le panneau avec les voiles avant/arrière.

L'invention concerne également le procédé de fabrication du panneau en laine minérale tel que décrit plus haut. Le procédé comprend une étape de fabrication d'un mat de fibres minérales, par centrifugation interne s'il s'agit de fibres de verre et par centrifugation externe s'il s'agit de fibres de roche, puis une étape de crêpage du mat de fibres de verre avec un taux de crêpage compris entre 1,5 et 5.

L'étape de fabrication du mat de fibres de verre par centrifugation interne est réalisée à l'aide d'une installation comportant :
∘ au moins un centrifugeur apte à tourner autour d'un axe X, notamment vertical, et dont la bande périphérique est percée d'une pluralité d'orifices pour délivrer des filaments d'un matériau fondu,
∘ un moyen d'étirage gazeux à haute température sous forme d'un brûleur annulaire qui assure l'étirage des filaments en fibres, et
∘ un tapis de réception associé à des moyens d'aspiration pour réceptionner les fibres.

Le ou les centrifugeurs, encore appelés assiettes de fibrage, permettent en effet de former des fibres minérales ou d'autres matériaux thermoplastiques, par un procédé de centrifugation interne associée à un étirage par un courant gazeux à haute température. La centrifugation interne s'applique notamment à la production industrielle de laine de verre destinée à entrer par exemple dans la composition de produits d'isolation thermique et/ou acoustique. Un filet de verre fondu est introduit dans chaque centrifugeur tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz, nommée tapis de réception.

Pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

Ces paramètres permettent en particulier d'ajuster la densité de surface et le micronaire du panneau en laine de verre.

De préférence, le diamètre des orifices de chaque centrifugeur est compris entre 0,5 et 1,1 mm. Chaque centrifugeur présente de préférence un diamètre compris entre 200 et 800 mm.

L'étape de fabrication du mat de fibres de roche par centrifugation externe est réalisée à l'aide d'une installation comportant
∘ au moins trois rotors aptes à tourner autour d'un axe Y, notamment horizontal, et dont le contact avec le matériau fondu permet de délivrer des fibres, et
∘ un tapis de réception associé à des moyens d'aspiration pour réceptionner les fibres.

Pendant l'étape de fabrication du mat de fibres de roche, une combinaison de paramètres est réglée parmi au moins :
∘ la tirée totale de roche par jour, qui est comprise entre 100 et 250 tonnes/jour,
∘ la vitesse de rotation des rotors, qui est comprise entre 2000 et 4000 tours/min.

Ces paramètres permettent en particulier d'ajuster la densité de surface et le fasonaire du panneau en laine de roche.

De préférence, chaque rotor présente un diamètre compris entre 150 mm et 350 mm.

En outre, dans les deux types de procédés, du liant est projeté sur les fibres minérales avant qu'elles ne tombent sur le tapis de réception, avec un taux compris entre 2% et 15% de la masse totale, de préférence entre 2% et 10% de la masse totale. Le mat de fibres minérales est ensuite passé en étuve, après le crêpage, afin de polymériser le liant.

Pour finaliser le produit, un voile est collé sur chacune des faces principales du panneau en laine de roche, les spécificités de chacun des voiles ayant été données plus haut.

Un premier exemple selon l'invention est un panneau en laine de verre de densité 117 kg/m³ et d'épaisseur de 50 mm, présentant une résistivité à l'écoulement d'air de 63 kPa.s/m² et un module d'Young de 2,3 MPa. Le micronaire est de 4,3/5g. Le taux de crêpage est de 3,5. Le panneau comporte un voile avant présentant une résistance spécifique à l'écoulement d'air de 0,3 kPa.s/m et un voile arrière étanche. Le panneau n'est pas découpé dans son épaisseur. L'absorption acoustique α_{W} est de 0,9 et l'isolation acoustique D_{nfw} est de 42 dB.

Un deuxième exemple selon l'invention est un panneau en laine de verre de densité de 102 kg/m³ et d'épaisseur 52 mm, présentant une résistivité à l'écoulement d'air de 68 kPa.s/m² et un module d'Young de 0,9 MPa. Le micronaire est de 3,6/5g. Le taux de crêpage est de 3,5. Le panneau comporte un voile avant présentant une résistance spécifique à l'écoulement d'air de 0,3 kPa.s/m et un voile arrière étanche. Le panneau n'est pas découpé dans son épaisseur. L'absorption acoustique α_{W} est de 0,95 et l'isolation acoustique D_{nfw} est de 41 dB.

Un troisième exemple selon l'invention est un panneau en laine de roche de densité 130 kg/m³ et d'épaisseur 38 mm, présentant une résistivité à l'écoulement d'air de 110 kPa.s/m² et un module d'Young de 0,9 MPa. Le fasonaire est de 270. Le taux de crêpage est de 3. Le panneau comporte un voile avant présentant une résistance spécifique à l'écoulement d'air de 0,3 kPa.s/m et un voile arrière étanche. Le panneau n'est pas découpé dans son épaisseur. L'absorption acoustique α_{W} est de 0,9 et l'isolation acoustique D_{nfw} est de 40 dB.

Ainsi, des panneaux en laine minérale avec à la fois une bonne absorption acoustique et une bonne isolation acoustique ont pu être fabriqués, sans découpe dans l'épaisseur.

## Revendications

1. Panneau en laine minérale destiné à être utilisé comme panneau acoustique et présentant :
- une densité de surface supérieure ou égale à 3,2 kg/m², de préférence supérieure ou égale à 4 kg/m², ou encore supérieure ou égale à 4,5 kg/m², voire supérieure ou égale à 5 kg/m²,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², mesurée selon la norme ISO 9053,
- un module d'Young compris entre 0,5 et 4 MPa, de préférence compris entre 0,8 et 4 MPa, de façon encore plus préférée entre 1,2 MPa et 4 MPa, voire entre 1,5 MPa et 4 MPa, ou encore entre 2 MPa et 4 MPa, mesuré selon la méthode définie dans la description,
- un taux de crêpage compris entre 1,5 et 5,
- et le panneau n'étant pas coupé dans l'épaisseur selon un plan sensiblement parallèlement à ses faces principales.

2. Panneau selon la revendication 1, présentant en outre un micronaire compris entre 2,5/5g et 6/5g, de préférence entre 3/5g et 6/5g, voire entre 3,5/5g et 6/5g, ou encore entre 4/5g et 5/5g ou un fasonaire compris entre 200 et 300, de préférence entre 200 et 290, voire entre 200 et 280, ou encore entre 200 et 270.

3. Panneau selon la revendication 1 ou 2, comprenant en outre, sur chacune de ses faces principales, un voile.

4. Panneau selon l'une des revendications 1 à 3, dans lequel le voile destiné à être tourné du côté d'où provient le son à amortir ayant une résistance spécifique à l'écoulement de l'air inférieure ou égale à 1 kPa.s/m, de préférence inférieure ou égale à 0,5 kPa.s/m, et le voile opposé ayant une résistivité spécifique à l'écoulement de l'air supérieure ou égale à 1 kPa.s/m, de préférence supérieure ou égal 5 kPa.s/m, voire supérieure ou égale à 10 kPa.s/m, ou encore étanche à l'air.

5. Panneau selon l'une des revendications 1 à 4, comprenant un taux massique de liant compris entre 2% et 15% de la masse totale, de préférence entre 2% et 10% de la masse totale.

6. Panneau selon l'une des revendications 1 à 5, présentant une absorption acoustique α_{W} supérieure ou égale à 0,9.

7. Panneau selon l'une des revendications 1 à 6, présentant une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

8. Procédé de fabrication du panneau en laine minérale selon l'une des revendications 1 à 7, comprenant les étapes suivantes :
- fabrication d'un mat de fibres minérales par :
∘ centrifugation interne pour des fibres de verre, à l'aide d'une installation comportant :
▪ au moins un centrifugeur apte à tourner autour d'un axe X, notamment vertical, et dont la bande périphérique est percée d'une pluralité d'orifices pour délivrer des filaments d'un matériau fondu,
▪ un moyen d'étirage gazeux à haute température sous forme d'un brûleur annulaire qui assure l'étirage des filaments en fibres, et
▪ un tapis de réception associé à des moyens d'aspiration pour réceptionner les fibres, ou
∘ centrifugation externe pour des fibres de roche, à l'aide d'une installation comportant :
▪ au moins trois rotors aptes à tourner autour d'un axe Y, notamment horizontal, et dont le contact avec le matériau fondu permet de délivrer des fibres, et
▪ un tapis de réception associé à des moyens d'aspiration pour réceptionner les fibres,
- crêpage du mat de fibres minérales avec un taux de crêpage compris entre 1,5 et 5, de préférence entre 2 et 5, voire entre 2,5 et 5, ou encore entre 3 et 5.

9. Procédé selon la revendication 8, dans lequel, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, qui est comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur, qui est compris entre 5000 et 40000, de préférence entre 15000 et 35000, et
∘ la vitesse de rotation du centrifugeur à une vitesse supérieure à 2000 tours/minute.

10. Procédé selon la revendication 8 ou 9, dans lequel que le diamètre des orifices de chaque centrifugeur est compris entre 0,5 et 1,1 mm.

11. Procédé selon l'une des revendications 8 à 10, dans lequel chaque centrifugeur présente un diamètre compris entre 200 et 800 mm.

12. Procédé selon la revendication 8, dans lequel, pendant l'étape de fabrication du mat de fibres de roche, une combinaison de paramètres est réglée parmi au moins :
∘ la tirée totale de roche par jour, qui est comprise entre 100 et 250 tonnes/jour,
∘ la vitesse de rotation des rotors, qui est comprise entre 2000 et 4000 tours/min.

13. Procédé selon la revendication 12, dans lequel chaque rotor présente un diamètre compris entre 150 mm et 350 mm.

14. Procédé selon l'une des revendications 8 à 13, dans lequel du liant est projeté sur les fibres minérales avant qu'elles ne tombent sur le tapis de réception, avec un taux compris entre 2% et 15% de la masse totale, de préférence entre 2% et 10% de la masse totale, le mat de fibres minérales étant passé en étuve, de préférence après crêpage, afin de polymériser le liant.

15. Procédé selon l'une des revendications 8 à 14, dans lequel un voile est collé sur chacune des faces principales du panneau en laine minérale.

## Patentansprüche

1. Mineralwollplatte, die für eine Verwendung als Akustikplatte bestimmt ist, und die Folgendes aufweist:
- eine Oberflächendichte, die größer als oder gleich 3,2 kg/m², vorzugsweise größer als oder gleich 4 kg/m² oder weiter größer als oder gleich 4,5 kg/m², sogar größer als oder gleich 5 kg/m², ist,
- eine Luftströmungsresistivität, die zwischen 30 und 120 kPa.s/m², vorzugsweise zwischen 50 und 110 kPa.s/m², sogar zwischen 50 und 100 kPa.s/m² oder weiter zwischen 50 und 90 kPa.s/m², sogar zwischen 50 und 80 kPa.s/m², liegt, gemessen gemäß der Norm ISO 9053,
- ein Elastizitätsmodul, das zwischen 0,5 und 4 MPa, vorzugsweise zwischen 0,8 und 4 MPa, noch mehr bevorzugt zwischen 1,2 MPa und 4 MPa, sogar zwischen 1,5 MPa und 4 MPa, oder weiter zwischen 2 MPa und 4 MPa, liegt, gemessen gemäß der Methode, die in der Beschreibung definiert ist,
- einen Kreppanteil, der zwischen 1,5 und 5 liegt,
- und wobei die Platte nicht in der Dicke entlang einer Ebene geschnitten wird, die im Wesentlichen parallel zu ihren Hauptflächen verläuft.

2. Platte nach Anspruch 1, die ferner einen Micronaire-Wert, der zwischen 2,5/5 g und 6/5 g, vorzugsweise zwischen 3/5 g und 6/5 g, sogar zwischen 3,5/5 g und 6/5 g oder weiter zwischen 4/5 g und 5/5 g liegt oder einen Fasonaire-Wert, der zwischen 200 und 300, vorzugsweise zwischen 200 und 290, sogar zwischen 200 und 280 oder weiter zwischen 200 und 270, liegt, aufweist.

3. Platte nach Anspruch 1 oder 2, ferner umfassend, auf jeder ihrer Hauptflächen, einen Schleierstoff.

4. Platte nach einem der Ansprüche 1 bis 3, wobei der Schleierstoff, der dafür bestimmt ist, der Seite zugewandt zu sein, von der der zu dämpfende Schall stammt, einen spezifischen Luftströmungswiderstand von kleiner als oder gleich 1 kPa.s/m, vorzugsweise kleiner als oder gleich 0,5 kPa.s/m, besitzt, und der gegenüberliegende Schleierstoff eine spezifische Luftströmungsresistivität von größer als oder gleich 1 kPa.s/m, vorzugsweise größer als oder gleich 5 kPa.s/m, sogar größer als oder gleich 10 kPa.s/m, besitzt oder weiter luftdicht ist.

5. Platte nach einem der Ansprüche 1 bis 4, umfassend einen Massenanteil an Bindemittel, der zwischen 2 % und 15 % der Gesamtmasse, vorzugsweise zwischen 2 % und 10 % der Gesamtmasse, liegt.

6. Platte nach einem der Ansprüche 1 bis 5, die eine Schallabsorption α_{W} größer als oder gleich 0,9 aufweist.

7. Platte nach einem der Ansprüche 1 bis 6, die eine akustische Isolierung D_{nfw} aufweist, die größer als oder gleich 38 dB, vorzugsweise größer als oder gleich 39 dB, sogar größer als oder gleich 40 dB oder weiter größer als oder gleich 41 dB, sogar größer als oder gleich 42 dB, ist.

8. Verfahren zum Herstellen der Mineralwollplatte nach einem der Ansprüche 1 bis 7, umfassend die folgenden Schritte:
- Herstellen einer Mineralfasermatte durch:
∘ interne Zentrifugation für Glasfasern mittels einer Anlage mit:
▪ mindestens einer Zentrifuge, die geeignet ist, sich um eine Achse X, insbesondere vertikal, zu drehen und deren Umfangsband von einer Vielzahl von Öffnungen durchbrochen ist, um Filamente eines geschmolzenen Materials abzugeben,
▪ einem gasförmigen Hochtemperatur-Streckmittel in Form eines Ringbrenners, der für das Strecken der Filamente zu Fasern sorgt, und
▪ einem Aufnahmeband, dem Saugmittel zum Aufnehmen der Fasern zugeordnet sind, oder
∘ externe Zentrifugation für Gesteinsfasern mittels einer Anlage mit:
▪ mindestens drei Laufrädern, die geeignet sind, um sich um eine Achse Y, insbesondere horizontal, zu drehen und deren Kontakt mit dem geschmolzenen Material die Abgabe von Fasern ermöglicht, und
▪ einem Aufnahmeband, dem Saugmittel zum Aufnehmen der Fasern zugeordnet sind,
- Kreppen der Mineralfasermatte mit einem Kreppanteil, der zwischen 1,5 und 5, vorzugsweise zwischen 2 und 5, sogar zwischen 2,5 und 5 oder weiter zwischen 3 und 5, liegt.

9. Verfahren nach Anspruch 8, wobei während des Schritts des Herstellens der Glasfasermatte eine Kombination von Parametern eingestellt wird aus mindestens:
∘ der Viskosität des geschmolzenen Glases, die zwischen 820 und 1500 Poise, vorzugsweise zwischen 950 und 1200 Poise, liegt,
∘ dem Druck des Brenners, der zwischen 200 und 1000 mm CE, vorzugsweise zwischen 200 und 600 mm CE, liegt,
∘ dem gesamten Glasdurchsatz pro Tag und pro Zentrifuge, der zwischen 14 Tonnen/Tag und 23 Tonnen/Tag, vorzugsweise zwischen 17 und 22 Tonnen/Tag, liegt,
∘ der Anzahl von Löchern jeder Zentrifuge, die zwischen 5000 und 40000, vorzugsweise zwischen 15000 und 35000, liegt, und
∘ der Rotationsgeschwindigkeit der Zentrifuge auf eine Geschwindigkeit von größer als 2000 Umdrehungen/Minute.

10. Verfahren nach Anspruch 8 oder 9, wobei der Durchmesser der Öffnungen jeder Zentrifuge zwischen 0,5 und 1,1 mm liegt.

11. Verfahren nach einem der Ansprüche 8 bis 10, wobei jede Zentrifuge einen Durchmesser aufweist, der zwischen 200 und 800 mm liegt.

12. Verfahren nach Anspruch 8, wobei während des Schritts des Herstellens der Gesteinsfasermatte eine Kombination von Parametern eingestellt wird aus mindestens:
∘ dem gesamten Gesteinsdurchsatz pro Tag, der zwischen 100 und 250 Tonnen/Tag liegt,
∘ der Rotationsgeschwindigkeit der Laufräder, die zwischen 2000 und 4000 Umdrehungen/Minute liegt.

13. Verfahren nach Anspruch 12, wobei jedes Laufrad einen Durchmesser aufweist, der zwischen 150 mm und 350 mm liegt.

14. Verfahren nach einem der Ansprüche 8 bis 13, wobei das Bindemittel auf die Mineralfasern gesprüht wird, bevor diese auf das Aufnahmeband fallen, mit einem Anteil, der zwischen 2 % und 15 % der Gesamtmasse, vorzugsweise zwischen 2 % und 10 % der Gesamtmasse, liegt, wobei die Mineralfasermatte vorzugsweise nach dem Kreppen durch einen Ofen geführt wird, um das Bindemittel zu polymerisieren.

15. Verfahren nach einem der Ansprüche 8 bis 14, wobei ein Schleierstoff auf jede der Hauptflächen der Mineralwollplatte aufgeklebt wird.

## Claims

1. A mineral wool panel intended to be used as an acoustic panel and having:
- a surface density of greater than or equal to 3.2 kg/m², preferably greater than or equal to 4 kg/m², or else greater than or equal to 4.5 kg/m², or greater than or equal to 5 kg/m²,
- an air flow resistivity of between 30 and 120 kPa.s/m², preferably of between 50 and 110 kPa.s/m², or of between 50 and 100 kPa.s/m², or else of between 50 and 90 kPa.s/m², or of between 50 and 80 kPa.s/m², measured according to standard ISO 9053,
- a Young's modulus of between 0.5 and 4 MPa, preferably of between 0.8 and 4 MPa, more preferably still of between 1.2 MPa and 4 MPa, or of between 1.5 MPa and 4 MPa, or else of between 2 MPa and 4 MPa, measured according to the method defined in the description,
- a degree of crimping of between 1.5 and 5,
- and the panel not being cut through the thickness along a plane substantially parallel to its main faces.

2. The panel as claimed in claim 1, additionally having a micronaire of between 2.5/5g and 6/5g, preferably between 3/5g and 6/5g, or between 3.5/5g and 6/5g, or else between 4/5g and 5/5g or a fasonaire of between 200 and 300, preferably between 200 and 290, or between 200 and 280, or else between 200 and 270.

3. The panel as claimed in claim 1 or 2, additionally comprising a veil on each of its main faces.

4. The panel as claimed in one of claims 1 to 3, wherein the veil intended to be facing the side from where the sound to be absorbed originates having a specific air flow resistance of less than or equal to 1 kPa.s/m, preferably less than or equal to 0.5 kPa.s/m, and the opposite veil having a specific air flow resistivity of greater than or equal to 1 kPa.s/m, preferably greater than or equal to 5 kPa.s/m, or even greater than or equal to 10 kPa.s/m, or else airtight.

5. The panel as claimed in one of claims 1 to 4, comprising a weight content of binder of between 2% and 15% of the total weight, preferably of between 2% and 10% of the total weight.

6. The panel as claimed in one of claims 1 to 5, having a sound absorption α_{W} of greater than or equal to 0.9.

7. The panel as claimed in one of claims 1 to 6, having a sound insulation D_{nfw} of greater than or equal to 38 dB, preferably greater than or equal to 39 dB, or greater than or equal to 40 dB, or else greater than or equal to 41 dB, or greater than or equal to 42 dB.

8. A process for manufacturing the mineral wool panel as claimed in one of claims 1 to 7, comprising the following steps:
- manufacturing a mat of mineral fibers by:
∘ internal centrifugation for glass fibers, using equipment comprising:
▪ at least one centrifuge capable of rotating about an axis X, in particular a vertical axis, and the peripheral band of which is pierced by a plurality of orifices for delivering filaments of a molten material,
▪ a high-temperature gas attenuating means in the form of an annular burner that attenuates the filaments into fibers, and
▪ a receiving belt associated with suction means for receiving the fibers, or
∘ external centrifugation for rock fibers, using equipment comprising:
▪ at least three rotors capable of rotating about an axis Y, in particular a horizontal axis, and the contact of which with the molten material makes it possible to deliver fibers, and
▪ a receiving belt associated with suction means for receiving the fibers,
- crimping the mat of mineral fibers with a degree of crimping of between 1.5 and 5, preferably of between 2 and 5, or of between 2.5 and 5, or else of between 3 and 5.

9. The process as claimed in claim 8, wherein, during the step of manufacturing the mat of glass fibers, a combination of parameters is regulated from among at least:
∘ the viscosity of the molten glass, which is between 820 and 1500 poise, preferably between 950 and 1200 poise,
∘ the pressure of the burner, which is between 200 and 1000 mm WC, preferably between 200 and 600 mm WC,
∘ the total daily output of glass per centrifuge, which is between 14 metric tonnes/day and 23 metric tonnes/day, preferably between 17 and 22 metric tonnes/day,
∘ the number of holes of each centrifuge, which is between 5000 and 40 000, preferably between 15 000 and 35 000, and
∘ the rotational speed of the centrifuge at a speed greater than 2000 revolutions/minute.

10. The process as claimed in claim 8 or 9, wherein the diameter of the orifices of each centrifuge is between 0.5 and 1.1 mm.

11. The process as claimed in one of claims 8 to 10, wherein each centrifuge has a diameter of between 200 and 800 mm.

12. The process as claimed in claim 8, wherein, during the step of manufacturing the mat of rock fibers, a combination of parameters is regulated from among at least:
∘ the total daily output of rock, which is between 100 and 250 metric tonnes/day,
∘ the rotational speed of the rotors, which is between 2000 and 4000 revolutions/min.

13. The process as claimed in claim 12, wherein each rotor has a diameter of between 150 mm and 350 mm.

14. The process as claimed in one of claims 8 to 13, wherein binder is projected onto the mineral fibers before they fall onto the receiving belt, with a content of between 2% and 15% of the total weight, preferably of between 2% and 10% of the total weight, the mat of mineral fibers being passed into a drying oven, preferably after crimping, in order to polymerize the binder.

15. The process as claimed in one of claims 8 to 14, wherein a veil is adhesively bonded to each of the main faces of the mineral wool panel.
